# EUROPEAN PATENT SPECIFICATION

(11) **EP 1 683 412 B1**
(45) Date of publication and mention of the grant of the patent: **09.01.2008**
(21) Application number: 04818432.9
(22) Date of filing: 11.11.2004
(51) Int. Cl.: A01K 11/00

(54) **TAGGING SYSTEM COMPRISING A DISPOSABLE INJECTOR**
KENNZEICHNUNGSSYSTEM MIT WEGWERF-INJEKTOR
SYSTEME DE MARQUAGE A INJECTEUR JETABLE

(30) Priority: 12.11.2003 ES 200302629; 23.04.2004 ES 200400979
(43) Date of publication of application: 26.07.2006
(73) Proprietor: Signe, S.A., 28760 Tres Cantos Madrid (ES)
(72) Inventor: PINEDO CRESPO, José Luis, E-28023 Aravaca - Madrid (ES)
(74) Representative: Urizar Anasagasti, Jesus Maria
(86) International application number: PCT/ES2004/070096
(87) International publication number: WO 2005/046319

(56) References cited:
- WO-A2-02/39810
- DE-U1- 29 702 906
- ES-A1- 2 178 964
- US-A- 4 185 635
- US-A- 5 024 013

## Description

### Object of the Invention

The present invention shows a new ear tagging system in which its injector is completely disposable for the sanitary protection of the wound inflicted on the animal subject to the ear tag placing process. The movement of the injector towards the ear tag is rectilinear due to a closure by means of a rack, thus preventing injector breakage.

The field of application of this new patent of invention is generally within the field of sanitary products and more specifically, in the range of sanitary products for animal application, tagging and complying with the regulations on the control of live animals bred for reproduction or slaughtering and use in the food chain.

### Background of the Invention

Live animal ear tagging systems for their lifetime identification and until their slaughtering for human consumption currently require perforating the external ear lobe of the animal, which definitely produces pain and a wound that causes the blood of the animal to come into contact with its epidermis, the environment and the area in which it lives, and which can possibly cause an infection in the animal if the wound is not treated immediately in the specific way and with specific products. This infection produces itching and discomfort to the animal which can lose the ear tag when it scratches itself, causing bureaucratic sanitary control problems, the ear tag loss causing the rejection of the animal for human consumption, the disease and treatment of the ear tagged animal or its death due to the spreading of the infection.

Lack of its use or using other types of specific products and systems do not assure in any case the desired final result.

In the current state of the art, there are two ear tagging systems that are different to the one herein proposed.

In the first, with Spanish application number P200100953 and entitled "Improved Ear Tag", an improved ear tag is disclosed formed by two parts, a male part and a female part in which a capsule for medicinal substances and a plunger are incorporated, and the pin of the male part penetrates the ear of the animal. Catadioptric elements, a reading and writing chip and tamper-proof elements and elements for the clamp or pliers parts to allow placing the ear tag are arranged in both parts.

### Description of the Invention

To reduce or as the case may be, to eliminate the foregoing drawbacks, an ear tagging system with a disposable injector as claimed is presented.

In the present invention, the antiseptic liquid is inside the pliers deposit and no capsule has to be put in each ear tag; it is the pliers that have the deposit to dose the amount.

In the ear tagging system object of the present patent of invention, the antiseptic liquid is inside the pliers deposit and it is not necessary to put capsules in each ear tag, the pliers have a deposit to dose the amount. The ear tag male and female elements are made of flexible plastic with some notches in their planar area to aid this flexibility, in this way, if the animal ear tag is snagged by a branch, the ear will not be torn. Even though the male part is flexible, the injector through which the liquid passes is rigid and while the ear tag is being placed the male part does not bend. In the final end of the male part, before the tip, the cylinder becomes narrow so that when attempting to detach the ear tag, the latter breaks, thus avoiding possible tampering, and the pointed part remains inside the female part.

The ventilation of the wound inflicted on the ear of the animal when it is ear tagged is fundamental for its proper healing. Forced ventilation based on the thermal draft effect is needed in addition to natural ventilation.

Following the Venturi effect, it has been concluded that forced ventilation depends on three variables:
- The orifices used for injecting the disinfecting product.
- The distance between the inlet and outlet orifices, limited to prevent ear tag movement and occasional snagging.
- The diameter of the orifices, which must assure the exit of the disinfecting product.

Considering eight inlet orifices, in contact with the wound, and a single outlet orifice, an airflow rate of 70 cm³ per hour is obtained. This flow rate together with natural ventilation by direct contact with the air is considered to be sufficient for the proper healing of the wound inflicted at the time of ear tagging.

The pliers are provided with a cylindrical case which carries the disposable injector and can be moved backwards. Furthermore, it has a stop in the guide cylinder of said case, which pumps the liquid and injects it through a disposable injector distributing it through the orifices in the shaft of the male part.

The closing of the pliers is straight due to a rack element. By means of this rack closure, the injector slides straight towards the ear tag while closing the pliers. In this way, a regulation of the force applied to the injector is achieved, preventing possible detachments and breakages.

The aim of the disposable injector is to prevent blood contact between cattle thus avoiding crossed infections.

The liquid is conveyed through the injector which, due to the exerted pressure, pumps the liquid from the pliers deposit and directs it through the disposable injector through the central canal to the shaft of the ear tag male part, which, while penetrating the ear of the animal to end up embracing the female part, is fastened and remains fixed to said ear, the liquid distribution over the wound being carried out through orifices provided in the shaft of the ear tag male part.

Both the male and female parts of the ear tag may be provided with a transponder that can be used for identifying the animal and other data without having to inject it subcutaneously.

The ventilation of the wound inflicted in the ear of the animal when it is ear tagged is fundamental for its proper healing. Forced ventilation based on the thermal draft effect is needed in addition to natural ventilation.

Following the Venturi effect, it has been concluded that forced ventilation depends on three variables:
- The orifices used for injecting the disinfecting product.
- The distance between the inlet and outlet orifices, limited to prevent ear tag movement and occasional snagging.
- The diameter of the orifices, which must assure the exit of the disinfecting product.

Considering eight inlet orifices, in contact with the wound, and a single outlet orifice, an airflow rate of 70 cm³ per hour is obtained. This flow rate together with natural ventilation by direct contact with the air is considered to be sufficient for the proper healing of the wound inflicted at the time of ear tagging.

The device is also provided with a distance regulator, a pump body strap and a flow regulator for adjusting said device for its use in different types of animals.

In this way, the antiseptic liquid treatment product bathes both the inside of the orifice and the obverse and reverse sides of the auricular appendage skin surface, preventing wound infection and subsequent problems, as well as pain for the animal.

### Description of the Drawings

To complement the description which is being carried out and with the aim of better understanding the features of the invention, a series of drawings are herein enclosed as an integral part of the same, in which the following has been depicted in an illustrating and non-limiting way:

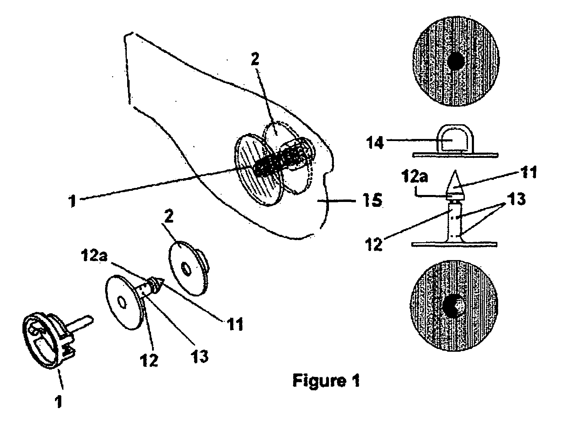

- Figure 1: An exploded view of the ear tagging system.

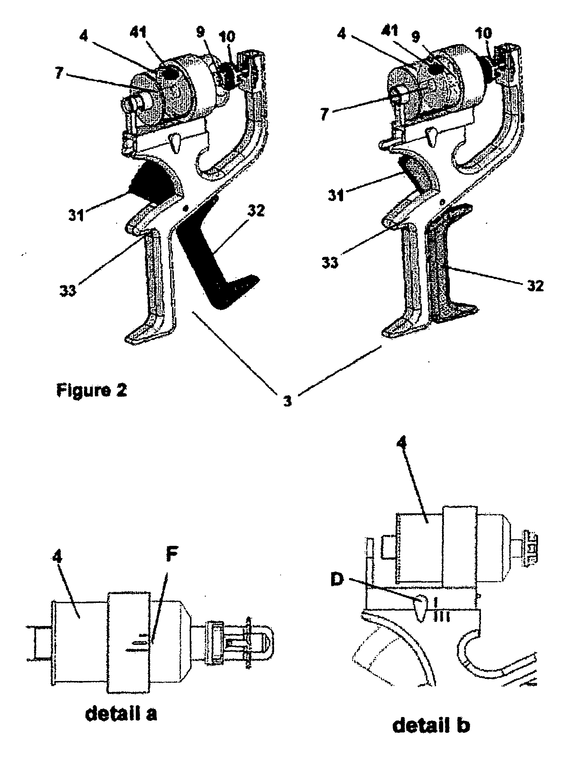

- Figure 2: A perspective view of the pliers with the disposable injector. Including detail (a) with the flow rate regulator and detail (b) with the distance regulator.

### Preferred Embodiment of the Invention

As can be seen in the enclosed drawings, the ear tagging system with a disposable injector, object of the present patent of invention, basically consists of a male part (1) which is fastened to a female part (2), the constituent elements for identifying cattle, and they carry this out on an auricular appendage (15) of the animal, the male part (1) penetrating the skin, cartilage and tissues of said appendage (15).

The specific instrument for carrying out said operation is a pair of pliers (3) which carries both elements (1 and 2) on each of its ends.

The end carrying the male part (1) is provided with a mechanism that leads to the passage of the liquid contained inside a deposit (4), with a stopper (41) to facilitate its reloading, pumped by pump (7). The liquid contained inside deposit (4) passes through the injector seat (9) and through the disposable injector (10) and exits through the orifices (13) provided in the shaft (12) of the male part (1), just when the tip (11) of the male part (1) penetrates the auricular appendage (15) and is fixed in the centre (14) of the female part (2). The neck (12a) of the male part (1) prevents using the same ear tag in two different animals by the breaking of the shaft (12) of the male part (1) in the case of wanting to unfasten it from the female part (2).

The device is also provided with a distance regulator (D), a pump body strap and a flow rate regulator (F) for adjusting said device for its use in different types of animals.

The movement of the pliers (3) is rectilinear due to the rack guide (31) when the movable semiclamp (32) and the supporting semiclamp (33) are closed together.

Having sufficiently described the nature of the present invention, as well as a way of putting it into practice, it must simply be added that said invention may be subjected to certain variations in shape and materials as long as said alterations do not substantially vary the features that are claimed below.

## Claims

1. An ear tagging system with a disposable injector, of the type used to save the animal from possible infections as well as to cure the wound produced, **characterized in that** it consists of a male part (1) which is fastened to a female part (2), both of them flexible, which are the constituent elements for identifying cattle and carried on an auricular appendage (15) of the animal, the male part (1) penetrating the skin, cartilage and tissues of said appendage (15); a device for carrying out said operation is a pair of pliers (3) which carries both parts (1 and 2) on each of its ends; the end carrying the male part (1) is provided with a mechanism that leads to the passage of a liquid contained inside a deposit (4), with a stopper (41) to facilitate its reloading and pumped by a pump (7); the device is also provided with a distance regulator (D), a pump body strap and a flow rate regulator (F) for adjusting said device for its use in different types of animals.

2. An ear tagging system with a disposable injector according to claim 1, **characterized in that** the liquid contained in the deposit (4) passes through an injector seat (9) and through the disposable injector (10) and exits through orifices (13) provided in the shaft (12) of the male part (1), just when the tip (11) of the male part (1) penetrates the auricular appendage (15) and is fixed in the centre (14) of the female part (2); the neck (12a) of the male part (1) prevents using the same ear tag to two different animals by the breaking of the shaft (12) of the male part (1) in the case of wanting to unfasten it from the female part (2).

3. An ear tagging system with a disposable injector according to claim 1, **characterized in that** the movement of the pliers (3) is rectilinear due to a rack guide (31) when a movable semiclamp (32) and a supporting semiclamp (33) are closed together.

## Patentansprüche

1. Ohrmarkierungssystem mit einem wegwerfbaren Applikator, der Art, die zur Vermeidung von möglichen Infektionen des Tieres, als auch zur Heilung der verursachten Wunde verwendet wird, **dadurch gekennzeichnet, dass** es aus einer an einer Matrize (2) befestigten Patrize (1) besteht, beide elastisch, welche die konstituierenden Elemente zur Identifikation von Vieh bilden und an einem Aurikularanhang (15) des Tieres getragen werden, wobei die Patrize (1) in die Haut, den Knorpel und das Gewebe des Anhanges (15) durchsticht; ein Gerät zur Ausführung dieses Vorganges ist ein Zangenpaar (3) das an jedem seiner Enden beide Teile (1 und 2) trägt; wobei das die Patrize (1) tragende Ende mit einem zum Durchfluss einer in einem Behälter (4) beinhalteten Flüssigkeit führenden Mechanismus ausgestattet ist, mit einem Stopfen (41), um dessen Wiederauffüllung zu ermöglichen und durch eine Pumpe (7) gepumpt; das Gerät ist zur Einstellung des Gerätes für seinen Einsatz bei verschiedenen Tierarten ebenfalls mit einem Abstandsregler (D), einer Pumpenkörperklammer und einem Durchsatzregler (F) ausgestattet.

2. Ohrmarkierungssystem mit einem wegwerfbaren Applikator gemäß Anspruch 1, **dadurch gekennzeichnet, dass** die im Behälter (4) beinhaltete Flüssigkeit durch eine Applikatoraufnahme (9) und durch den wegwerfbaren Applikator (10) strömt und durch in der Achse (12) der Patrize (1) vorgesehene Öffnungen (13) austritt, genau dann wenn die Spitze (11) der Patrize (1) in den Aurikularanhang (15) eindringt und in der Mitte (14) der Matrize (2) fixiert wird; der Hals (12a) der Patrize (1) verhindert die Verwendung derselben Ohrmarke bei zwei verschiedenen Tieren durch Brechen der Achse (12) der Patrize (1) für den Fall, dass man sie von der Matrize (2) lösen will.

3. Ohrmarkierungssystem mit einem wegwerfbaren Applikator gemäß Anspruch 1, **dadurch gekennzeichnet, dass** die Bewegung der Zangen (3) wenn eine bewegliche Halbzange (32) und eine stützende Halbzange (33) zusammengedrückt werden aufgrund einer Zahnführung (31) geradlinig verläuft.

## Revendications

1. Système de marquage auriculaire avec un injecteur jetable, du type utilisé pour protéger l'animal contre des éventuelles infections ainsi que pour guérir la blessure produite, **caractérisé en ce qu'**il consiste en une partie mâle (1) qui est fixée à une partie femelle (2), les deux étant flexibles, lesquelles sont les éléments constitutifs pour l'identification du bétail et sont portés sur un appendice auriculaire (15) de l'animal, la partie mâle (1) pénétrant dans la peau, le cartilage et les tissus dudit appendice (15) ; un dispositif pour mettre en oeuvre ladite opération est une paire de pinces (13), qui porte les deux parties (1 et 2) sur chacune de ses extrémités ; l'extrémité qui porte la partie mâle (1) est pourvue d'un mécanisme qui permet le passage d'un liquide contenu au sein d'un dépôt (4), avec un bouchon (41) pour faciliter sa recharge et pompé au moyen d'une pompe (7) ; le dispositif est également pourvu d'un régulateur de distance (D), une sangle de corps de pompe et un régulateur de débit (F) pour ajuster ledit dispositif pour son utilisation dans différents types d'animaux.

2. Système de marquage auriculaire avec un injecteur jetable selon la revendication 1, **caractérisé en ce que** le liquide contenu dans le dépôt (4) passe à travers un siège d'injecteur (9) et à travers l'injecteur jetable (10) et sort à travers des orifices (13) aménagés dans l'axe (12) de la partie mâle (1), juste au moment où la pointe (11) de la partie mâle (1) pénètre dans l'appendice auriculaire (15) et qu'il se fixe au centre (14) de la partie femelle (2), le cou (12a) de la partie mâle (1) évite l'utilisation de la même étiquette sur deux animaux différents en rompant l'axe (12) de la partie mâle (1) si l'on veut la retirer de la partie femelle (2).

3. Système de marquage auriculaire avec un injecteur jetable selon la revendication 1, **caractérisé en ce que** le mouvement des pinces (3) est rectiligne à cause d'un guide de crémaillère (31) lorsqu'une demi-pince mobile (32) et une demi-pince de support (33) se referment ensemble.
